# EUROPEAN PATENT APPLICATION

(11) **EP 4 797 728 A1**
(43) Date of publication of application: **26.08.2026**
(21) Application number: 25159745.6
(22) Date of filing: 24.02.2025
(51) Int. Cl.: H04R 5/04, G06F 3/16, H04S 7/00

(54) **APPARATUS, METHOD AND SYSTEM FOR AUDIO APPLICATIONS**

(71) Applicant: Harman Becker Automotive Systems GmbH, 76307 Karlsbad (DE)
(72) Inventor: KREJCI, Philipp Maximilian, 76275 Ettlingen (DE); VON TÜRCKHEIM, Friedrich, 22587 Hamburg (DE); NEUMANN, Manfred, 95326 Kulmbach (DE); KLEIN, Johannes, 77694 Kehl (DE)
(74) Representative: Rummler, Felix

(57) **Abstract**

An apparatus and a method for audio applications. The apparatus comprising a memory and a processor, the processor is configured to receive a first audio signal, receive metadata associated with the first audio signal, create a first profile associated with the first audio signal, the first profile comprising a plurality of adjustable audio parameters, and process the first audio signal with the plurality of adjustable audio parameters of the first profile. The processor is further configured to send the processed first audio signal with the first profile to one or more playback devices. The processor is further configured to receive, from one or more sensors, one or more first user inputs, analyse the one or more first user inputs, and adjust one or more of the plurality of audio parameters of the first profile based on the analysis, the metadata, or a combination of the analysis and the metadata. The processor is further configured to process the first audio signal with the adjusted first profile, and send the processed first audio signal with the adjusted first profile to the one or more channels.

## Description

The present invention relates to a method, an apparatus and a system for audio applications. In particular, the invention relates to a method of adjusting a plurality of audio parameters of an audio signal, and an apparatus comprising a processor configured to adjust a plurality of audio parameters of an audio signal.

### BACKGROUND OF THE INVENTION

Conventional sound systems are known in the industry to include one or more channels (for example, to support mono sound, stereo sound, surround sound, etc.), each of the one or more channels coupled to one or more loudspeakers. Such sound systems are coupled to a music source (for example, a radio, a physical media (for example, memory, CD, vinyl, cassette, etc.) player, a network, or similar) and may play back the music through the one or more channels.

Such sound systems are employed in a variety of different configurations. Known sound systems may be within a confined room such as in a living space or in a vehicle (i.e. a car, a boat, an aeroplane, or similar). Alternative known sound systems may be portable (and thus not confined to a specific room), such as portable loudspeakers/boomboxes, headphones, ear-phones, or similar.

To enhance user experience and to take advantage of different types of sound systems, different channel and/or loudspeaker characteristics, some sound systems include user adjustable sound settings (for example, volume, equaliser, gain, reverb and other adjustments). These may be adjusted with physical buttons (such as knobs directly or indirectly connected/coupled to the sound system) or may be software operable (for example, operable with a user equipment device that is coupled to the sound system via a network).

With the increasing complexity of sound systems users get increasingly more overwhelmed by the number of user adjustable settings. For a user without a deep technical background, it is likely that they are unable to adjust the sound settings in such a way that the sound system creates the best sound experience to the personal preference of the user. Moreover, with the increased amount of flexibility in sound systems and adjustable sound settings, it is likely that such a user is unable to utilize the full system capabilities.

Accordingly, there is a need in the industry to provide an arrangement for audio applications that simplifies the complexity of sound systems for the average user, and that enables the adjustment of sound to meet personal preferences of the user.

### SUMMARY

To achieve the above objectives, the invention sets out an apparatus, a method and a system as in the claims below.

In a preferred embodiment an apparatus including a memory and a processor is provided. The processor is operable to receive a first audio signal (for example, an audio input), receive metadata associated with the first audio signal, and to create a first profile associated with the first audio signal, the first profile comprising a plurality of adjustable audio parameters. The processor is configured to process the first audio signal with the plurality of adjustable audio parameters of the first profile, and to send the processed first audio signal with the first profile to one or more playback devices. The processor is configured to receive, from one or more sensors, one or more first user inputs, to analyse the one or more first user inputs, and to adjust one or more of the plurality of audio parameters of the first profile based on the analysis, the metadata, or a combination of the analysis and the metadata. The processor is configured to process the first audio signal with the adjusted first profile, and to send the processed first audio signal with the adjusted first profile to the one or more playback devices.

Advantageously, the need to adjust technical sound settings can be offloaded from the user by providing a guided method that collects and analyses data from the audio signal and user data, and automatically adjusts the sound settings to the user's preferences. Accordingly, a personalised sound system can be provided automatically which improves the user experience.

In an embodiment the processor is further operable to receive one or more second user inputs, analyse the one or more second user inputs, adjust one or more of the plurality of audio parameters of the first profile based on the analysis of the one or more second user inputs, to process the first audio signal with the adjusted first profile, and to send the processed first audio signal with the adjusted first profile to the one or more playback devices.

Advantageously, the apparatus can learn from an additional amount of collected data and use the outcome to more accurately predict and adapt preference settings automatically. This provides more personalised and optimised sound settings for a user.

In an embodiment, the processor is further operable to send a request for the one or more first user inputs, and to receive the one or more first user inputs subsequent to sending the request.

Advantageously, the apparatus can participate in active learning by prompting a user to provide an input (for example, a statement such as "I like this", a thumbs up motion, or similar). This provides additional input types to understand a user's preference compared to relying solely on passive inputs (for example, waiting for a user to increase the volume when music of a certain genre is played). The processor may trigger the user from time to time, thereby presenting intermediate learning results by requesting further user feedback. Accordingly, the results are continuously improved.

In an embodiment, the processor is further operable to send a request for the one or more second user inputs, and to receive the one or more second user inputs subsequent to sending the request.

Advantageously, the apparatus can participate in active learning by prompting a user to provide an input (for example, a statement such as "I like this", a thumbs up motion, or similar). This provides additional input types to understand a user's preference compared to relying solely on passive inputs (for example, waiting for a user to increase the volume when music of a certain genre is played). The processor may trigger the user from time to time, thereby presenting intermediate learning results by requesting further user feedback. Accordingly, the results are continuously improved.

In an embodiment, the first audio signal is a music file and the metadata includes one or more of a genre of the music file, alphanumeric data of the music file, and a duration of the music file.

Advantageously, audio signals (such as music) can be classified in a large number of different categories and category types (for example, according to their genre, any text data, number data, duration of the music, etc.) and a corresponding unique profile can be created for any one of the categories. Thus, a unique profile can be created, for example, based on genre of the music, based on an artist of the music, based on the language of the music, or any other metadata found in the audio signal.

In an embodiment, the one or more first and/or second user inputs include one or more of an image from a camera, a video from a camera, a motion from a motion sensor, a sound input from a microphone, a physical input on a user interface, and a biometric input from one or more sensors.

Advantageously, a user's true preference of settings can be determined by recording the user's physical movements and their biometric features.

In an embodiment, the plurality of audio parameters include one or more of volume, equaliser settings, delay settings, gain settings, reverb settings, and one or more spatial immersion settings.

Advantageously, the sound settings can be adjusted accurately to reflect a user's true preference.

In an embodiment, one or more of the plurality of audio parameters are pre-set at creation of the first profile.

Advantageously, computational requirements are reduced by providing one or more pre-set audio parameters that, for example, are likely to be at or close to a user's preference. The pre-set audio parameters may be pre-set based on other user profiles with a similar profile to that of the user.

In an embodiment, the processor is further operable to receive a second audio signal, to receive metadata associated with the second audio signal, to determine a similarity score of the metadata of the second audio signal to the metadata of the first audio signal, and to process the second audio signal with the plurality of adjustable audio parameters of the first profile if the similarity score is above a pre-determined threshold. The processor is further operable to send the processed second audio signal with the first profile to the one or more playback devices, to receive, from one or more sensors, one or more third user inputs, to analyse the one or more third user inputs, and to adjust one or more of the plurality of audio parameters of the first profile based on the analysis, the metadata, or a combination of the analysis and the metadata. The processor is further operable to process the second audio signal with the adjusted first profile, and to send the processed second audio signal with the adjusted first profile to the one or more playback devices.

Advantageously, a variety of different types of audio signals (for example, music) can be played back. If the different types of audio signals are determined to be similar to that of the audio signal played back earlier, then the system can apply the same profile, thus providing playback of the audio signals to the user's preference.

In an embodiment, the processor is further operable to receive a second audio signal, to receive metadata associated with the second audio signal, to determine a similarity score of the metadata of the second audio signal to the metadata of the first audio signal, to create a second profile associated with the second audio signal if the similarity score is below a pre-determined threshold, the second profile comprising a plurality of adjustable audio parameters, to process the second audio signal with the plurality of adjustable audio parameters of the second profile, and to send the processed second audio signal with the second profile to the one or more playback devices. The processor is further configured to receive, from one or more sensors, one or more fourth user inputs, to analyse the one or more fourth user inputs, to adjust one or more of the plurality of audio parameters of the second profile based on the analysis, the metadata, or a combination of the analysis and the metadata, to process the second audio signal with the adjusted second profile, and to send the processed second audio signal with the adjusted second profile to the one or more playback devices.

Advantageously, a variety of different types of audio signals (for example, music) can be played back. If the different types of audio signals are determined to be different to that of the audio signal played back earlier, then the system can apply a different profile, or create a new profile, thus providing playback of the audio signals to the user's preference.

In a preferred embodiment a system is provided. The system includes the apparatus as defined above, one or more playback devices coupled to the apparatus. The system includes one or more sensors coupled to the apparatus, and a graphical user interface (GUI) coupled to the apparatus.

Advantageously, the need to adjust technical sound settings can be offloaded from the user by providing a guided method that collects and analyses data from the audio signal and user data, and automatically adjusts the sound settings to the user's preferences. Accordingly, a personalised sound system can be provided automatically which improves the user experience.

In a preferred embodiment a method is provided. The method includes receiving a first audio signal, receiving metadata associated with the first audio signal, and creating a first profile associated with the first audio signal, the first profile comprising a plurality of adjustable audio parameters. The method includes processing the first audio signal with the plurality of adjustable audio parameters of the first profile, and sending the processed first audio signal with the first profile to one or more playback devices. The method includes receiving, from one or more sensors, one or more first user inputs, analysing the one or more first user inputs, and adjusting one or more of the plurality of audio parameters of the first profile based on the analysis, the metadata, or a combination of the analysis and the metadata. The method includes processing the first audio signal with the adjusted first profile, and sending the processed first audio signal with the adjusted first profile to the one or more playback devices.

Advantageously, the need to adjust technical sound settings can be offloaded from the user by providing a guided method that collects and analyses data from the audio signal and user data, and automatically adjusts the sound settings to the user's preferences. Accordingly, a personalised sound system can be provided automatically which improves the user experience.

In an embodiment, the method further includes receiving one or more second user inputs, analysing the one or more second user inputs, and adjusting one or more of the plurality of audio parameters of the first profile based on the analysis of the one or more second user inputs. The method further includes processing the first audio signal with the adjusted first profile, and sending the processed first audio signal with the adjusted first profile to the one or more playback devices.

Advantageously, the apparatus can learn from an additional amount of collected data and use the outcome to more accurately predict and adapt preference settings automatically. This provides more personalised and optimised sound settings for a user.

In an embodiment, the method further includes receiving a second audio signal, receiving metadata associated with the second audio signal, determining a similarity score of the metadata of the second audio signal to the metadata of the first audio signal, and processing the second audio signal with the plurality of adjustable audio parameters of the first profile if the similarity score is above a pre-determined threshold. The method further includes sending the processed second audio signal with the first profile to the one or more playback devices, receiving, from one or more sensors, one or more third user inputs, analysing the one or more third user inputs, and adjusting one or more of the plurality of audio parameters of the first profile based on the analysis, the metadata, or a combination of the analysis and the metadata. The method further includes processing the second audio signal with the adjusted first profile, and sending the processed second audio signal with the adjusted first profile to the one or more playback devices.

Advantageously, a variety of different types of audio signals (for example, music) can be played back. If the different types of audio signals are determined to be similar to that of the audio signal played back earlier, then the system can apply the same profile, thus providing playback of the audio signals to the user's preference.

In an embodiment, the method further includes receiving a second audio signal, receiving metadata associated with the second audio signal, determining a similarity score of the metadata of the second audio signal to the metadata of the first audio signal, and creating a second profile associated with the second audio signal if the similarity score is below a pre-determined threshold, the second profile comprising a plurality of adjustable audio parameters. The method further includes processing the second audio signal with the plurality of adjustable audio parameters of the second profile, sending the processed second audio signal with the second profile to the one or more playback devices, receiving, from one or more sensors, one or more fourth user inputs, and analysing the one or more fourth user inputs. The method further includes adjusting one or more of the plurality of audio parameters of the second profile based on the analysis, the metadata, or a combination of the analysis and the metadata, processing the second audio signal with the adjusted second profile, and sending the processed second audio signal with the adjusted second profile to the one or more playback devices.

Advantageously, a variety of different types of audio signals (for example, music) can be played back. If the different types of audio signals are determined to be different to that of the audio signal played back earlier, then the system can apply a different profile, or create a new profile, thus providing playback of the audio signals to the user's preference.

### BRIEF DESCRIPTION OF THE DRAWINGS

The features, objects, and advantages of the present disclosure will become more apparent from the detailed description set forth below when taken in conjunction with the drawings in which like reference numerals refer to similar elements.
Figure 1 illustrates a user interaction with a sound system;
Figure 2 shows a system including a computer comprising a processor, memory and a graphical user interface (GUI), a network coupled to the computer, and a plurality of playback devices coupled to a plurality of channels, according to the invention;
Figure 3 illustrates an example scenario on the graphical user interface of figure 2 according to the invention;
Figure 4 illustrates a further example scenario on the graphical user interface of figure 2 according to the invention;
Figure 5 illustrates yet a further example scenario on the graphical user interface of figure 2 according to the invention;
Figure 6 illustrates another example scenario on the graphical user interface of figure 2 according to the invention;
Figure 7 depicts a flow chart of a method for audio applications according to the invention; and
Figure 8 depicts a flow chart of further methods for audio applications according to alternative embodiments of the invention.

### DETAILED DESCRIPTION

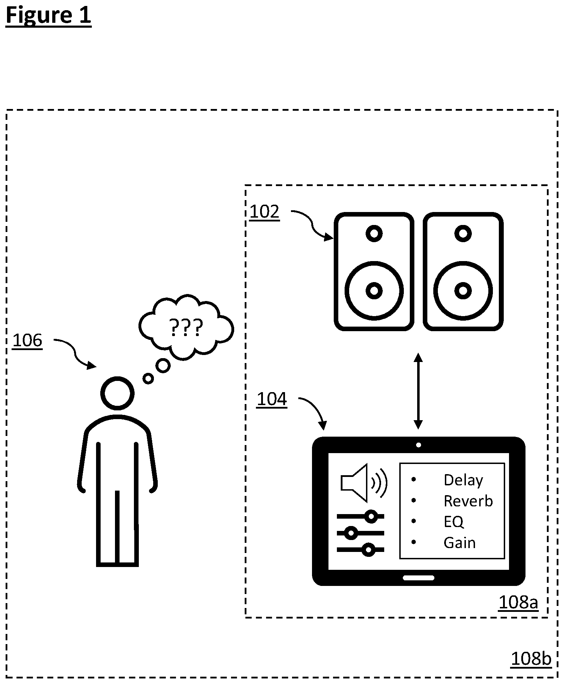

Figure 1 illustrates a sound system 108a, 108b and a user 106 interacting with the sound system 108a, 108b. The sound system 108a, 108b (herein also referred to with reference numeral 108) may be any system including one or more playback devices (for example, one or more audio playback devices which may be loudspeakers, drivers, television sets, user equipment devices, or similar) 102 coupled to a computer 104. The one or more playback devices (or drivers) 102 may be coupled (with a wired connection or wireless connection) to the computer 104 via one or more channels (for example, to support mono, stereo, or surround sound playback of sound). The one or more playback devices 102 may be standalone loudspeakers or may be part of a loudspeaker system (such as a soundbar, a television set, a mobile phone or similar). The computer 104 may be a user equipment such as a tablet and may include a graphical user interface (GUI). The computer 104 may be integrated to the one or more playback devices 102 (such as in a mobile phone or other user equipment) or it may be separate to the one or more playback devices 102 (such as a separate user equipment, tablet, remote control or similar to operate one or more loudspeakers). The computer 104 may have audio data (such as music, videos, audiobooks or any other type of audio data) stored on it, and/or the computer 104 may be operable to receive audio data from a source (such as from a network or a physical storage medium coupled to the computer 104). The computer 104 may be operable to alter the sound effects of the audio before being played back by the one or more playback devices 102. The computer 104 may also be operable to receive one or more inputs from the user 106.

The sound system 108a may be a system (or a unit) that is separate to the user. For example, the sound system 108a may be a sound bar, a television set, a user equipment device, a mobile phone, any type of handheld electronic device, or any other device including one or more loudspeakers and a computer 104. As mentioned above, the computer 104 may be part of the one or more playback devices 102 or it may be separate to the one or more playback devices 102.

The sound system 108b may be a large system (or unit) in which the user 106 is at least partially within the sound system 108b. For example, the sound system 108b may be a vehicle such as any type of road, off-road, water, underwater, or airborne vehicle including one or more playback devices 102 and a computer 104 to operate the one or more playback devices 102. As mentioned above, the computer 104 may be part of the one or more playback devices 102 or it may be separate to the one or more playback devices 102.

As shown in figure 1, with the increasing complexity of sound systems 108 users such as user 106 get increasingly more overwhelmed by the number of user adjustable settings. The adjustable settings, as shown on the computer 104 in figure 1, may include a variety of different sound settings such as a volume, delay, reverb, equaliser settings, gain settings etc. For a user 106 without a deep technical background, it is likely that they are unable to adjust the sound settings in such a way that the sound system 108 creates the best sound experience to the personal preference of the user 106. Moreover, with the increased amount of flexibility in sound systems 108 and adjustable sound settings, it is likely that such a user 106 is unable to utilize the full system capabilities.

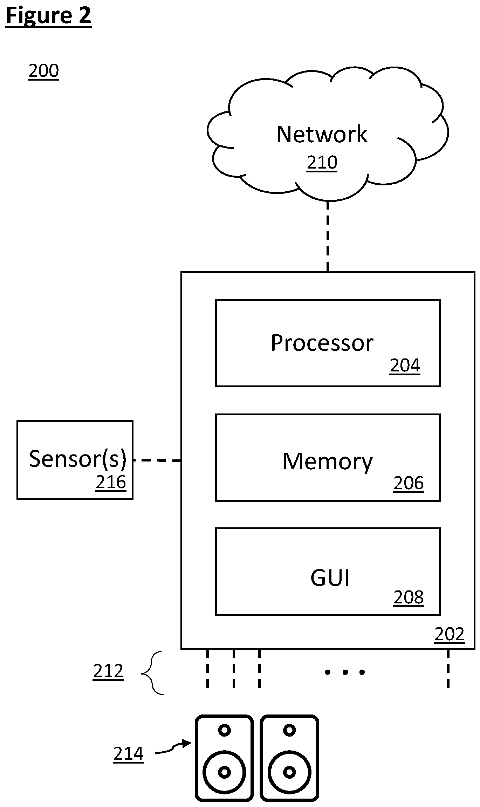

The present invention helps to offload the user 106 from the need to adjust technical sound settings by providing an apparatus and system (as described in figure 2 below) and a guided method that collects & analyses user data & automatically adjusts the sound settings to the user's 106 preferences. This helps to easily personalize the sound system 108 to the user's own preferences and improves the overall user experience. The present invention tailors the user's 106 experience by learning user preferences based on collected data such as preferred music genres, user inputs. The user inputs may be inputs received via an application on the computer 104, a human machine interface (HMI) on the computer 104, verbal inputs, automatic mood detection, or a combination thereof. The invention focuses on the data collection & learning from it. The computer 104 may include an experience learning engine (ELE) which may be a dedicated part of the processor and/or memory of the computer 104 to collects & analyses user data & automatically adjusts the sound settings to the user's 106 preferences. Advantageously, a personalised user experience is provided. Accordingly, the experience provided to the user (for example, an audio or light effect) is based on user-specific, individual preferences. These preferences are the input data for the ELE and the basis for learning and subsequent personalization.

Figure 2 shows a system 200 including an apparatus 202. The apparatus 202 may be a computer, such as computer 104 described above in figure 1. The apparatus 202 includes a memory 206 and a processor 204. The apparatus 202 may include an experience learning engine (ELE) which may be a dedicated part of the processor 204 and/or memory 204 of the computer 202. The apparatus 202 may include a graphical user interface (GUI) 208 which may include any type of display or projection system operable to display one or more images to a user. The GUI 208 may be operable to receive one or more inputs (for example, touch inputs from a touch screen or from one or more physical buttons or knobs) from a user. The GUI 208 may be part integrated with the computer (including the processor 204 and the memory 206) or it may be separate and coupled (for example, with a wired or wireless connection) to the computer. The apparatus 202 may include one or more input/output interfaces (not shown). The apparatus 202 may be coupled (for example, with a wired or wireless connection) to a network 210 and the apparatus may send data to the network 210 and receive data from the network 210. The data may include alphanumeric data, audio data, video data, or any other type of data/metadata.

The system 200 may include one or more output channels 212 coupled to the apparatus 202. The system 200 may include one or more playback devices 214. Each of the one or more playback devices 214 may be a loudspeaker, a driver, a user equipment, a television set, or any other device comprising means to playback an audio signal. Each of the one or more output channels 212 may be coupled to one or more of the playback devices 214. Each of the one or more output channels 212 may be operable to receive the same or a different audio signal from the apparatus 202. Accordingly, the system 200 can playback audio in mono, stereo, and/or in surround sound. The system 200 may include one or more sensors 216 coupled to the apparatus 202. The system 200 may include one or more sensors 216 (for example, this may include one or more motion sensors, microphones, cameras, one or more touch or other type of haptic sensors, one or more biometric sensors, etc.) operable to detect different types of inputs.

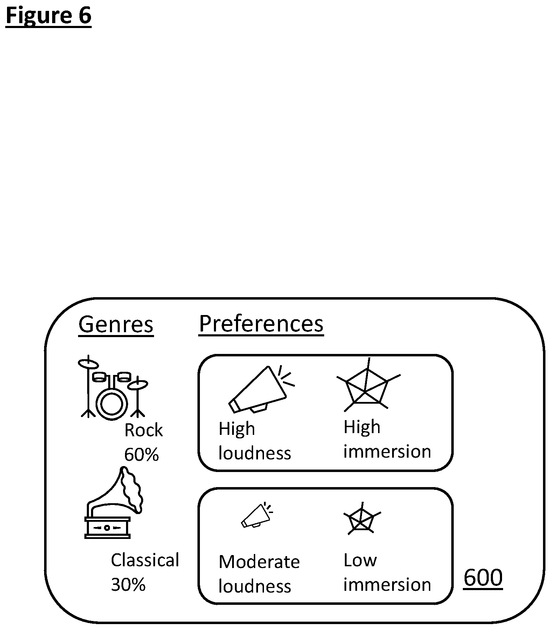

Accordingly, the ELE receives one or more inputs, processes the one or more inputs and sends one or more outputs from the processor 204 and the memory 206 to the GUI 208, the one or more playback devices 214, or a combination thereof. The one or more inputs may include one or more user inputs as described in this document, one or more user profiles (stored on memory 206 or the network 210) as described in this document, or any combination thereof. The one or more outputs may include one or more adjusted audio parameters (for example, an adjustment to the plurality of audio parameters as described in this document), one or more user profiles as described in this document (which may each include a user's preference), a user classification (for example, determining that a user is a "manager", a "child", a "parent", or similar), a display of learned preferences of a user on the GUI 208 (as described in figure 6 below), one or more animated avatars related to the user's preference, or any combination thereof. Advantageously, the apparatus 202 can provide a customized, personalized sound, video, light, or other experience to the user.

The computer 202 may carry out a plurality of operations to automatically provide a personalised sound system which improves the user experience. The operations may include a data collection operation in which the computer 202 receives a plurality inputs. The operations may include a learning operation in which at least a part of the computer 202 (for example, the ELE) learns from the collected data and uses the outcome of the learned collected data to predict and adapt preference settings automatically. The operations may include an operation in which the computer 202 (for example, the ELE) presents the learning results to the user and allows user modifications. The operations may include a user identification and/or classification operation in which one or more profiles (such as user profiles and/or audio profiles) may be created, each of the user and/or audio profiles storing the predicted and preferred settings. A user profile may include one or more audio profiles.

As part of the data collection operation, the processor 204 of the computer 202 receives a plurality of inputs. One input is an audio signal (which may, for example, be music data, audio data, video data with an audio signal, or any other type of data including audio). The audio signal may be stored on the memory 206 of the memory, or it may be received from an external source, such as the network 210 or any physical medium (such as a CD, cassette, vinyl, or other memory separate from the computer 202). The processor 204 also receives metadata associated with the audio signal. The processor 206 is operable to create a profile associated with the received audio signal. The profile may be created based on the metadata associated with the received audio signal. For example, the profile may be created by the processor to correspond to a genre of music, a duration of the audio signal, or any other alphanumeric data within the audio signal. The profile includes a plurality of adjustable audio parameters, as described in more detail below. The processor 206 is configured to process the audio signal with the plurality of adjustable audio parameters of the first profile, and to send the processed audio signal with the profile to the one or more playback devices 214 (or to the one or more channels 212 coupled to the one or more playback devices 214. The profile may be stored on the memory 206 of the computer 202. Alternatively or additionally, the profile may be stored on the network 210 to allow for easy access of the profile from any device (for example, any other computer) connected to the network, thus ensuring that a user's settings are stored and accessible irrespective of which device the user is using.

In an embodiment, the audio signal is a music file and the metadata includes one or more of a genre of the music file, alphanumeric data of the music file, a duration of the music file, and any other type of data. The alphanumeric data may be descriptive metadata that provides information about the nature of the music file. For example, this may include a genre, an artist name, a release date, a rhythm, tonality, and any other information about that music file.

Advantageously, audio signals (such as music) can be classified in a large number different categories and category types (for example, according to their genre, any text data, number data, duration of the music, etc.) and a corresponding unique profile can be created for any one of the categories. Thus, a unique profile can be created, for example, based on genre of the music, based on an artist of the music, based on the language of the music, or any other metadata found in the audio signal.

In an embodiment, the plurality of audio parameters may include one or more of volume, equaliser settings, delay settings, gain settings, reverb settings, and one or more spatial immersion settings. The audio parameters are not limited to this list and may include any number or type of parameters that can adjust the perceived audio experience by a user. For example, more complex audio technologies have hundreds of different tuning parameters. Some of them are parameters that are easily understandable for an end user (such as an 'amount of immersion' or a 'room size'). Other parameters may be low-level parameters that are used by an engineer. These may include parameters such as 'attack time for mono detection', 'forgetting factor of center extraction', etc. Advantageously, the sound settings can be adjusted accurately to reflect a user's true preference.

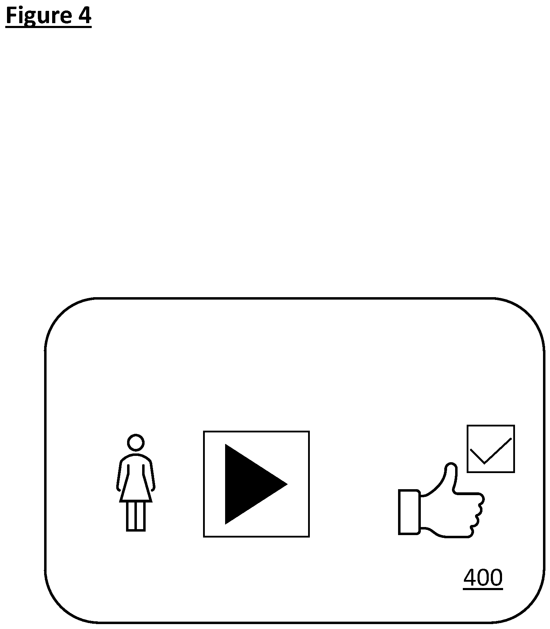

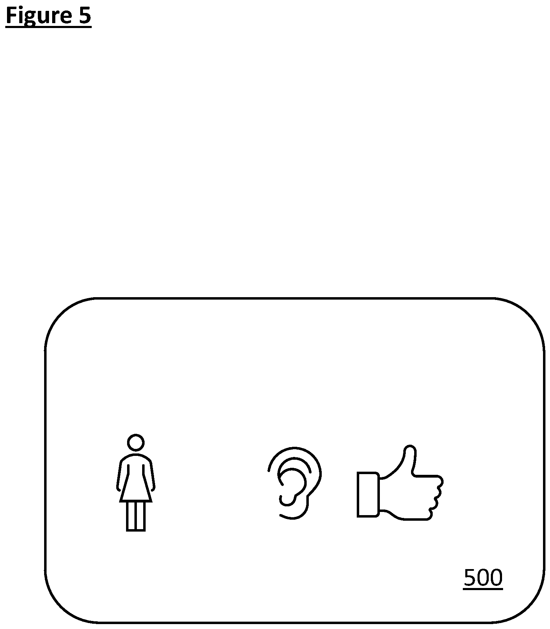

The data collection operation includes querying user preferences. This may include active querying as described in figure 4, passive querying as described in figure 5, or a combination of the two. Active querying may include prompting a user via an assistant (i.e. a welcome assistant) in an application 300, 400, 500 in a GUI to define personal preferences (such as a preferred volume, equaliser setting, immersion setting, etc.). This may include a user selecting a preferred variant (such as a preset setting) by selecting "like/dislike" buttons on the GUI. Passive querying may include monitoring a user's interaction to the audio signal in the background (for example, by measuring one or more body movements, one or more audio queues such as "I like this" or singing to the audio signal). Passive querying may also include analysis of a user's behavior and mood based on sensor data (for example, biometric sensors, body temperature sensors, etc.). The active or passive queries may be recorded as user inputs by one or more sensors 216 coupled to the computer 202. The processor 204 is operable to receive, from the one or more sensors, the one or more user inputs. The one or more user inputs may include one or more of an image from a camera, a video from a camera, a motion from a motion sensor, a sound input from a microphone, a physical input on a user interface, and a biometric input from one or more sensors. The above list is a non-exhaustive list and the one or more user inputs may include any other type of user input. Advantageously, a user's true preference of settings can be determined by recording the user's physical movements and their biometric features.

In the learning operation at least a part of the computer 202 (for example, the ELE) learns from the collected data and uses the outcome of the learned collected data to predict and adapt preference settings automatically. The processor 204 is configured to analyse the one or more user inputs, and to adjust one or more of the plurality of audio parameters of the profile based on the analysis, the metadata, or a combination of the analysis and the metadata. Each of the one or more user inputs may be classified as a positive input or as a negative input. In other words, each of the one or more user inputs may be classified as a confirmation that the user enjoys one or more of the current parameters (the positive input) or that the user does not enjoy one or more of the current parameters (the negative input). Each of the one or more user inputs may be assigned to one or more specific parameters. For example, the processor 204 may passively determine that a user enjoys music of a specific genre, a specific artist, etc. by analysing the user's body movement (for example, by recording the user with a sensor such as a camera) and observing a "positive" input (which may be head bobbing). The processor 204 may actively determine that a user does not enjoy the volume level of a current audio signal by prompting/querying the user. In an example, this my include displaying a question on the GUI stating "Do you like this volume?", "Is the volume too high?", "Is the volume too low?", or similar. The processor 204 may request an answer (for example, by displaying possible answers on the GUI, by issuing an audible question, etc.) and may be operable to receive positive or negative answers such as "Yes", "No", "It is too high", "It is too low", "I like this", "I don't like this", etc. Accordingly, the processor 204 can determine a user's preference in an audio signal and the audio signal's one or more parameters from the one or more user inputs. In an embodiment, the processor 204 may include a machine learning (ML) model to predict a user's preferred audio parameters for an audio signal. The ML model may also learn the user's inputs and be operable to determine whether a user input is classified as a positive response or a negative response.

The processor 204 is configured to process the audio signal with the adjusted profile, and to send the processed audio signal with the adjusted profile to the one or more playback devices (or to the one or more channels coupled to the one or more playback devices). In an embodiment, the processor 204 may continuously receive multiple user inputs and to analyse each of the user inputs, even while the audio signal is being played back through the playback devices 214. The processor 204 may continually adjust the one or more plurality of audio parameters of the profile each time one or more additional user inputs are received and analysed. The processor 204 may continually process (i.e. update) the audio signal with the adjusted profile based on the analysis, the metadata, or a combination of the analysis and the metadata. Accordingly, the audio signal is adjusted automatically to more closely resemble the user's preferred settings.

Advantageously, the need to adjust technical sound settings can be offloaded from the user by providing a guided method that collects and analyses data from the audio signal and user data, and automatically adjusts the sound settings to the user's preferences. Accordingly, a personalised sound system can be provided automatically which improves the user experience.

In an embodiment, the profile may be a user profile (i.e. a profile that is specific to a user of the computer 202). The user profile may include one or more additional profiles (such as one or more audio profiles which may be specific to groups of similar metadata, such as one or more genres, one or more artists, etc.). The user profile may be linked to the ELE of the apparatus 202. Accordingly, the user profile may be created by the ELE and may subsequently be adjusted by the ELE based on the collection and processing of the one or more user inputs.

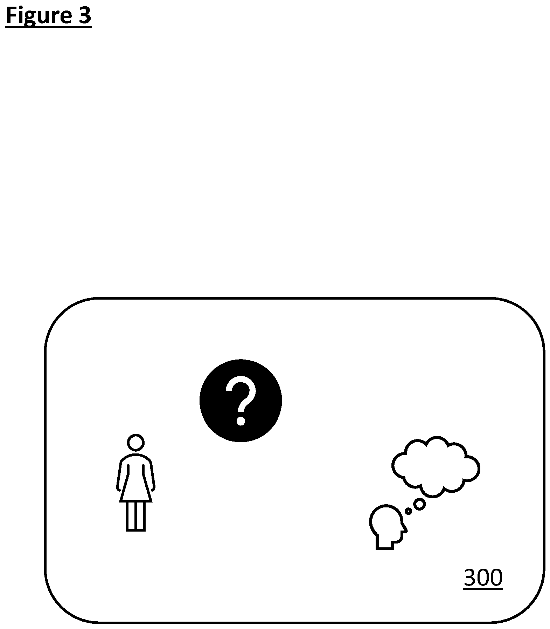

In an embodiment, the processor 204 may run a welcome assistant, such as the application 300 as shown in figure 3 which may be displayed on the GUI 208. The welcome assistant may prompt a user to provide a user identification input. The user identification input include receiving a photo or video and performing camera-based identification (such as, but not limited to, face identification), receiving an audio signal and performing audio signal analysis via microphones (such as, but not limited to, a voice signature), a Near Field Chip (NFC) handshake, an Ultra-Wideband (UWB) handshake, inserting a smart key, inputting an alphanumeric code (such as a passcode or passphrase, a Bluetooth handshake, or a link to a generic car profile. Subsequent to receiving the user identification input, the apparatus 202 may load one or more user profiles (stored on memory 206 or the network 210) associated with the user's identification credentials.

Alternatively, or additionally, the application 300 (the welcome assistant) may provide an option to the user to create a new user profile and may store the new user profile on memory 206 or the network 210. This may be advantageous in scenarios where multiple different users use the same apparatus 202 and each of the different users have different preferred sound requirements. Creating a new user profile and adjusting an existing user profile may each involve one or more active querying steps as discussed in the application 400 of figure 4, one or more passive querying steps as discussed in the application 500 of figure 5, or a combination of the two. The one or more user profiles as described herein may be created with blank settings or may include preset initial preferences such as a music genre, a loudness level, a preferred level of immersiveness, a speed compensation, etc.

The application 300 (the welcome assistant) may include an interactive wizard to determine top level preferences of the user. This may include prompting the user (via the GUI 208) to enter what type of music the user is interested in. The prompts to the user may include one or more visual cues (such as images and/or videos), one or more audio cues or similar. For example the visual cues may be of a person with a boombox on their shoulders to indicate a first preset, or of a person sitting in a classical concert hall to indicate a different second preset. The interactive wizard may include displaying information (for example, technical features, explanations, etc.) of the plurality of adjustable audio parameters. For example, this may include an explanation of immersiveness and the various types of immersiveness that the system 200 can provide. The interactive wizard may include playback of different music types, different music genres, etc. and prompt the user to provide an input (for example, a thumps up/down, a verbal indication "I liked/didn't like this", a physical input into the GUI 208, etc.) indicating whether the user liked or disliked any one of the playbacks. The interactive wizard may include an option to skip the interactive wizard.

In an embodiment, the system 200 may be operable to perform active queries (or active querying operations) as described above.

The processor 204 may run an application 400 as shown in figure 4 in which the option to active or de-active active querying operations is performed. The application 400 may be displayed on the GUI 208. The display of the application 400 may happen after the welcome screen 300 is displayed. The apparatus 202 may receive a user input (such as a voice command, a physical input from one or more physical buttons, a touch input on a touchscreen such as the GUI 208, a motion input from a motion sensor or camera, or similar) to activate or de-active the one or more active querying operations. The one or more active querying operations (if activated) may include sending one or more prompts to the user to provide input data. Accordingly, the one or more active querying operations correspond to one or more requests for one or more user inputs. The processer 204 may send a request for the one or more user inputs. The requests may include actively altering the one or more of the plurality of audio parameters and prompting the user (for example, by displaying a question on the GUI 208, by playing back an audio message such as a question on the one or more playback devices, or similar) to provide a user input (a response). The user input may a binary response (such as a positive or a negative response). Subsequent to sending the one or more requests, the processor 204 may receive the one or more user inputs. The user inputs may include one or more physical inputs on the GUI 208 (e.g., selecting one or more displayed options on a touchscreen or on physical buttons of the system 200), one or more visual inputs recorded by one or more cameras coupled to the processor 204 of the system 200, one or more audio inputs recorded by one or more microphones coupled to the processor 204 of the system, or similar.

For example, the prompt may include a statement such as "do you like this?" and the user input may include an option to select "yes/no" on the GUI 208, to say a voice command such as "yes/no" which may be recorded by one or more microphones coupled to the processor 204 and may thus be inputs to the apparatus 202, to provide a thumps up or thumbs down motion (or similar) which may be recorded by one or more cameras coupled to the processor 204 and may thus be inputs to the apparatus 202, or similar.

Advantageously, the apparatus can participate in active learning by prompting a user to provide an input (for example, a statement such as "I like this", a thumbs up motion, or similar). This provides additional input types to understand a user's preference compared to relying solely on passive inputs (for example, waiting for a user to increase the volume when music of a certain genre is played). The processor may trigger the user from time to time, thereby presenting intermediate learning results by requesting further user feedback. Accordingly, the results are continuously improved.

In an embodiment, the system 200 may be operable to perform passive queries (or passive querying operations) as described above.

The processor 204 may run an application 500 as shown in figure 5 in which the option to active or de-active passive querying operations is performed. The application 500 may be displayed on the GUI 208. The display of the application 500 may happen after the welcome screen 300 is displayed, after the application 400 is displayed, or before the application 400 is displayed. The apparatus 202 may receive a user input (such as a voice command, a physical input from one or more physical buttons, a touch input on a touchscreen such as the GUI 208, a motion input from a motion sensor or camera, or similar as described above) to activate or de-active the one or more active querying operations. The one or more passive querying operations (if activated) may include monitoring a user's interaction to the audio signal in the background (for example, by measuring one or more body movements, one or more audio queues such as a user saying "I like this" or singing to the audio signal). Passive querying may also include analysis of a user's behavior and mood based on sensor data (for example, biometric sensors, body temperature sensors, etc.). The active or passive queries may be recorded as user inputs by one or more sensors 216 coupled to the computer 202. The processor 204 is operable to receive, from the one or more sensors, the one or more user inputs. The one or more user inputs may include one or more of an image from a camera, a video from a camera, a motion from a motion sensor, a sound input from a microphone, a physical input on a user interface, and a biometric input from one or more sensors. The above list is a non-exhaustive list and the one or more user inputs may include any other type of user input. Advantageously, a user's true preference of settings can be determined by recording the user's physical movements and their biometric features.

In an embodiment the processor 204 is further operable to receive additional (second) user inputs subsequent the one or more user inputs received as described above (first user inputs). The second user inputs may be received from active querying operations as described in figure 4 or from passive querying operations as described in figure 5. The processor 204 may analyse the one or more second user inputs. This may include classifying the one or more second user inputs as positive inputs or negative inputs. The processor 204 may adjust one or more of the plurality of audio parameters of the profile based on the analysis of the one or more second user inputs. In other words, the processor 204 may adjust one or more of the plurality of audio parameters if the second user inputs are classified as negative inputs. Alternatively, the processor 204 may not adjust the one or more audio parameters if the second user inputs are classified as positive inputs. The processor 204 may process the audio signal with the adjusted profile (including the one or more adjusted audio parameters), and send the processed audio signal with the adjusted profile to the one or more playback devices 214. Advantageously, the apparatus can learn from an additional amount of collected data and use the outcome to more accurately predict and adapt preference settings automatically. This provides more personalised and optimised sound settings for a user.

In an embodiment, the processor 204 is further operable to send a request for the one or more second user inputs. The request may be part of the active querying operations as described in figure 4 above. The processor 204 may to receive the one or more second user inputs subsequent to sending the request as described above in figure 4 with regard to the (first) user inputs. Advantageously, the apparatus 202 can participate in active learning by prompting a user to provide an input (for example, a statement such as "I like this", a thumbs up motion, or similar). This provides additional input types to understand a user's preference compared to relying solely on passive inputs (for example, waiting for a user to increase the volume when music of a certain genre is played). The processor may trigger the user from time to time, thereby presenting intermediate learning results by requesting further user feedback. Accordingly, the results are continuously improved.

The processor 204 may classify the one or more user inputs (whether received as part of the active querying operations as described in figure 4, as part of the passive querying operations as described in figure 5, or a combination thereof) as positive or negative inputs. The processor 204 may link each user input to a specific audio parameter of the plurality of audio parameters, to a sub-set of the plurality of audio parameters (the sub-set including two or more of the plurality of audio parameters), or to all of the plurality of audio parameters. The processor 204 may adjust the linked audio parameter, the linked sub-set of audio parameters, or all of the audio parameters based on the analysis depending on whether the one or more user inputs are "positive" or "negative". For example, if a user input is classified as "positive", the processor 204 may determine that the user likes the current settings of the linked one or more audio parameters and may not adjust those linked one or more audio parameters. If a user input is classified as "negative", the processor 204 may determine that the user does not like the current settings of the linked one or more audio parameters and may adjust those linked one or more audio parameters. Accordingly, the processor 204 may adjust one or more of the plurality of audio parameters of the profile based on the analysis.

In an embodiment, the system 200 may be operable to present learning results from the ELE (application 600 as shown in figure 6) on the GUI 208. The application 600 may be displayed on the GUI 208. The display of the application 600 may happen after the welcome screen 300 is displayed, after the application 400 is displayed, or after the application 500 is displayed. The display of the application 600 may happen before the welcome screen 300 is displayed, before the application 400 is displayed, or before the application 500 is displayed. The application 600 may include an overview of the learning results by displaying each of the plurality of audio parameters or one or more subsets of audio parameters in the application 600. This may include one or more avatars for each of the plurality of audio parameters and/or subset of audio parameters. The learning results may include learning results related to metadata of the audio signals as described above. The learning results may correspond to a user's preference of the currently selected profile. For example, as shown in figure 6, the selected profile has a 60% listening history to rock music and a 30% listening history to classical music. As shown in figure 6, the selected profile prefers high loudness and a high level of immersion for rock music. The selected profile prefers moderate loudness and low immersion for classical music.

The learning results may include statistics & learning history of the ELE, an option to modify the learned preferences (via the GUI 208), an option to activate or de-activate one or more learning operations (as described in figures 4 and 5 above), allow a comparison of different user profiles, allow a comparison of the passive and the active learning states, and/or allow a comparison of learning results to pre-set settings. These learning results may each be linked to the stored user profiles. The GUI 208 may be operable to receive one or more inputs (for example physical inputs received on a touchscreen such as the GUI 208) to modify the learning results. This is advantageous in scenarios where a user disagrees with the learned results and would like to alter one or more of the parameters manually. The one or more inputs may include, for example, reducing or increasing the size of an icon in the application 600 (such as the 'loudness', or 'immersion' icons) or similar. This input may be treated as an active input as described above in figure 4.

In an embodiment, one or more of the plurality of audio parameters as described above may be pre-set at creation of a profile (for example, the profile created with application 300 as described in figure 3). Advantageously, computational requirements are reduced by providing one or more pre-set audio parameters that, for example, are likely to be at or close to a user's preference. The pre-set audio parameters may be pre-set based on other user profiles with a similar profile to that of the user.

In an embodiment, the processor 204 may include a machine learning (ML) model, an ML algorithm, an artificial intelligence (AI) blackbox, or similar to predict a user's preferred audio parameters for an audio signal. The ML model, ML algorithm, AI blackbox may be operable to determine whether a user input is classified as a positive response or a negative response.

In an embodiment, the processor 204 may be operable to receive a different audio signal (i.e. a second audio signal). The second audio signal may be different to the audio signal described above (i.e. a first audio signal). The processor 204 may be operable to receive metadata (as described above) associated with the second audio signal. The processor 204 may be operable to determine a similarity score of the metadata of the second audio signal to the metadata of the first audio signal. For example, the processor 204 may feed the metadata of the second audio and the metadata of the first audio signal into the ML model, ML algorithm, AI blackbox or similar. The processor 204 (i.e. the ML model, the ML algorithm, the AI blackbox, or similar) may compare the metadata of the second audio signal to the metadata of the first audio signal. The ML model, the ML algorithm, the AI blackbox or similar may determine provide a similarity score (for example, a numerical value such as a percentage).

The processor 204 may determine that the second audio signal is similar to the first audio signal if the similarity score is at or above a pre-determined threshold. The pre-determined threshold may be any numerical value (for example, it may be a number such as '10', '0.5' or any other suitable number) or it may be a percentage (for example 50%, or ½). The examples of numerical values and percentages are non-limiting examples and the pre-determined threshold may be any numerical value or percentage value.

If the processor 204 determines that the second audio signal is similar to the first audio signal, the processor 204 is operable to process the second audio signal with the plurality of adjustable audio parameters of the first profile. The processor 204 may be operable to send the processed second audio signal with the first profile to the one or more playback devices 214 (as described above). The processor 204 may be operable to receive, from one or more sensors 216, one or more user inputs (as described above). The processor 204 may be operable to analyse the one or more user inputs as described above, and to adjust one or more of the plurality of audio parameters of the first profile based on the analysis, the metadata, or a combination of the analysis and the metadata as described above. The processor 204 may be further operable to process the second audio signal with the adjusted first profile, and to send the processed second audio signal with the adjusted first profile to the one or more playback devices as described above. Advantageously, a variety of different types of audio signals (for example, music) can be played back. If the different types of audio signals are determined to be similar to that of the audio signal played back earlier, then the system can apply the same profile, thus providing playback of the audio signals to the user's preference.

The processor 204 may determine that the second audio signal is not similar to the first audio signal if the similarity score is below the pre-determined threshold. If the processor 204 determines that the second audio signal is not similar to the first audio signal, the processor 204 is operable to create a second profile associated with the second audio signal if the similarity score is below the pre-determined threshold, the second profile comprising a plurality of adjustable audio parameters as described above. The processor 204 may be operable to process the second audio signal with the plurality of adjustable audio parameters of the second profile as described above, and to send the processed second audio signal with the second profile to the one or more playback devices 216 as described above. The processor 204 may further be configured to receive, from one or more sensors 216, one or more user inputs as described above. The processor 204 may further be configured to analyse the one or more user inputs as described above, and to adjust one or more of the plurality of audio parameters of the second profile based on the analysis, the metadata, or a combination of the analysis and the metadata. The processor 204 may be configured to process the second audio signal with the adjusted second profile, and to send the processed second audio signal with the adjusted second profile to the one or more playback devices 214 as described above. Advantageously, a variety of different types of audio signals (for example, music) can be played back. If the different types of audio signals are determined to be different to that of the audio signal played back earlier, then the system can apply a different profile, or create a new profile, thus providing playback of the audio signals to the user's preference.

Any reference to "first", "second", "third", "fourth" or similar in this document is merely presented to distinguish between multiple features and does not count as a limiting factor, nor is it to represent any order or arrangement of features.

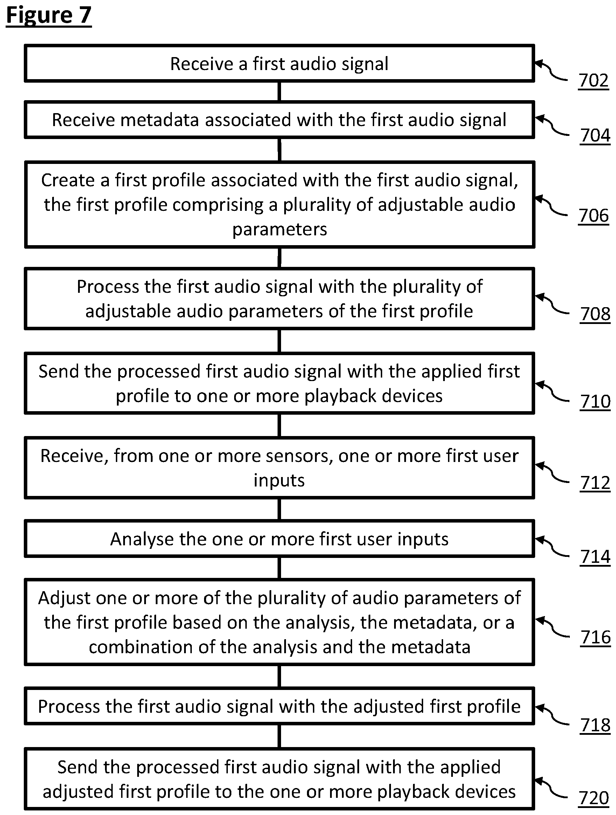

Figure 7 shows a flow chart of a method for audio applications according to the invention, as described above with reference to figures 1 to 6, according to the invention. The method may be performed by the system 200 and/or the apparatus 202 as described above in figure 2. The method includes at 702 receiving an audio signal (for example, the first audio signal as described above). The method includes at 704 receiving metadata associated with the audio signal, and at 706 creating a profile (for example, a first profile which may be a user profile as described above) associated with the audio signal, the profile comprising a plurality of adjustable audio parameters as described above. The method includes at 708 processing the audio signal with the plurality of adjustable audio parameters of the profile, and at 710 sending the processed audio signal with the profile to one or more playback devices (for example playback devices 214 as described in figure 2). The method includes at 712 receiving, from one or more sensors (for example, playback devices 216 as described in figure 2), one or more user inputs as described above. The method includes at 714, analysing the one or more user inputs, and at 716 adjusting one or more of the plurality of audio parameters of the profile based on the analysis, the metadata, or a combination of the analysis and the metadata. The method includes at 718 processing (for example, by processor 204 as described in figure 2) the audio signal with the adjusted profile, and at 720 sending the processed audio signal with the adjusted profile to the one or more playback devices.

Advantageously, the need to adjust technical sound settings can be offloaded from the user by providing a guided method that collects and analyses data from the audio signal and user data, and automatically adjusts the sound settings to the user's preferences. Accordingly, a personalised sound system can be provided automatically which improves the user experience.

In an embodiment, the method further includes receiving one or more second user inputs, analysing the one or more second user inputs, and adjusting one or more of the plurality of audio parameters of the first profile based on the analysis of the one or more second user inputs. The method further includes processing the first audio signal with the adjusted first profile, and sending the processed first audio signal with the adjusted first profile to the one or more playback devices.

Advantageously, the apparatus can learn from an additional amount of collected data and use the outcome to more accurately predict and adapt preference settings automatically. This provides more personalised and optimised sound settings for a user.

In an embodiment, the method further includes receiving a second audio signal, receiving metadata associated with the second audio signal, determining a similarity score of the metadata of the second audio signal to the metadata of the first audio signal, and processing the second audio signal with the plurality of adjustable audio parameters of the first profile if the similarity score is above a pre-determined threshold. The method further includes sending the processed second audio signal with the first profile to the one or more playback devices, receiving, from one or more sensors, one or more third user inputs, analysing the one or more third user inputs, and adjusting one or more of the plurality of audio parameters of the first profile based on the analysis, the metadata, or a combination of the analysis and the metadata. The method further includes processing the second audio signal with the adjusted first profile, and sending the processed second audio signal with the adjusted first profile to the one or more playback devices.

Advantageously, a variety of different types of audio signals (for example, music) can be played back. If the different types of audio signals are determined to be similar to that of the audio signal played back earlier, then the system can apply the same profile, thus providing playback of the audio signals to the user's preference.

In an embodiment, the method further includes receiving a second audio signal, receiving metadata associated with the second audio signal, determining a similarity score of the metadata of the second audio signal to the metadata of the first audio signal, and creating a second profile associated with the second audio signal if the similarity score is below a pre-determined threshold, the second profile comprising a plurality of adjustable audio parameters. The method further includes processing the second audio signal with the plurality of adjustable audio parameters of the second profile, sending the processed second audio signal with the second profile to the one or more playback devices, receiving, from one or more sensors, one or more fourth user inputs, and analysing the one or more fourth user inputs. The method further includes adjusting one or more of the plurality of audio parameters of the second profile based on the analysis, the metadata, or a combination of the analysis and the metadata, processing the second audio signal with the adjusted second profile, and sending the processed second audio signal with the adjusted second profile to the one or more playback devices.

Advantageously, a variety of different types of audio signals (for example, music) can be played back. If the different types of audio signals are determined to be different to that of the audio signal played back earlier, then the system can apply a different profile, or create a new profile, thus providing playback of the audio signals to the user's preference.

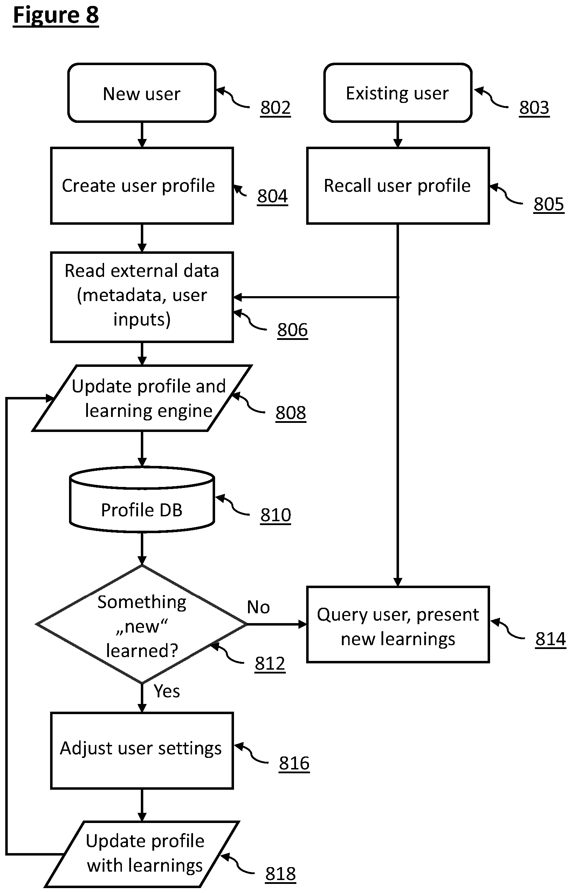

Figure 8 shows a general overview of the method described in figure 7 as well as additional method steps for audio applications which can be combined with the method as described above with regard to figure 7 and with the arrangement as described above with reference to figures 1 to 6. At 802 (or alternatively at 803) the system 200 is woken up by receiving a command from a user (for example, switching an on/off button or by receiving a wake-up command). At 802, a new user may be determined, for example by the welcome assistant of the application 300 described in figure 3. When running through the welcome assistant, a user profile may be created at 804. Alternatively, an existing user 803 may be determined to be present if the user logs on using their credentials as described above and an existing user profile may be recalled 805. The newly created user profile at 804 and/or the recalled existing profile at 805 may be stored on the memory 206 of the apparatus 202, on the network 210, on a separate device in communication with the apparatus 202, or any combination thereof. At 806, the processor 204 of the apparatus 202 may receive an audio signal as described above and may also receive metadata and one or more user inputs (as described above, for example, in figures 4 and 5). At 808, the processor 204 may update the profile (which may include processing the audio signal with a plurality of audio parameters or adjusted audio parameters) based on the metadata associated with the audio signal, the one or more user inputs, or a combination thereof and may store the updated profile in the profile database (DB) at 810. At 812, the processor 204 determines whether the user profile meets the user's preferences or not. This includes analysing the user inputs as described above. If the processor 204 determines that the user profile meets the user's preferences, then it is determined that nothing new has been learned about the user and their preferences. The processor 204 may then query whether the user is present at 814 by actively querying the user for one or more inputs (as described in figure 4). Alternatively or additionally, the processor 204 may present the user with the present learning results (as described in figure 6) and allow the user to make any alterations to those learnings. If the processor 204 determines that the user profile does not meet the user's preferences, then it is determined that something new has been learned about the user and their preferences. The processor 204 may then adjust the user profile settings (for example, by adjusting the one or more of the plurality of audio parameters of the user profile as described above). At 818, the processor 204 may update the user profile with the new learnings and subsequently process the audio signal with the adjusted audio parameters, as in step 808 and as described above.

## Claims

1. An apparatus comprising:
memory; and
a processor, the processor operable to:
receive a first audio signal;
receive metadata associated with the first audio signal;
create a first profile associated with the first audio signal, the first profile comprising a plurality of adjustable audio parameters;
process the first audio signal with the plurality of adjustable audio parameters of the first profile;
send the processed first audio signal with the first profile to one or more playback devices;
receive, from one or more sensors, one or more first user inputs;
analyse the one or more first user inputs;
adjust one or more of the plurality of audio parameters of the first profile based on the analysis, the metadata, or a combination of the analysis and the metadata;
process the first audio signal with the adjusted first profile to the first audio signal; and
send the processed first audio signal with the adjusted first profile to the one or more playback devices.

2. The apparatus of claim 1, wherein the processor is further operable to:
receive one or more second user inputs;
analyse the one or more second user inputs;
adjust one or more of the plurality of audio parameters of the first profile based on the analysis of the one or more second user inputs;
process the first audio signal with the adjusted first profile to the first audio signal; and
send the processed first audio signal with the adjusted first profile to the one or more playback devices.

3. The apparatus of claims 1 or 2, wherein the processor is further operable to:
send a request for the one or more first user inputs; and
receive the one or more first user inputs subsequent to sending the request.

4. The apparatus of claims 2 or 3, wherein the processor is further operable to:
send a request for the one or more second user inputs; and
receive the one or more second user inputs subsequent to sending the request.

5. The apparatus of any one of claims 1 to 4, wherein the first audio signal is a music file and wherein the metadata comprises one or more of:
a genre of the music file;
alphanumeric data of the music file; and
a duration of the music file.

6. The apparatus of any one of claims 1 to 5, wherein the one or more first and/or second user inputs comprise one or more of:
an image from a camera;
a video from a camera;
a motion from a motion sensor;
a sound input from a microphone;
a physical input on a user interface; and
a biometric input from one or more sensors.

7. The apparatus of any one of claims 1 to 6, wherein the plurality of audio parameters comprise one or more of:
volume;
equaliser settings;
delay settings;
gain settings;
reverb settings; and
one or more spatial immersion settings.

8. The apparatus of any one of claims 1 to 7, wherein one or more of the plurality of audio parameters are pre-set at creation of the first profile.

9. The apparatus of any one of claims 1 to 8, wherein the processor is further operable to:
receive a second audio signal;
receive metadata associated with the second audio signal;
determine a similarity score of the metadata of the second audio signal to the metadata of the first audio signal;
process the second audio signal with the plurality of adjustable audio parameters of the first profile if the similarity score is above a pre-determined threshold;
send the processed second audio signal with the first profile to the one or more playback devices;
receive, from one or more sensors, one or more third user inputs;
analyse the one or more third user inputs;
adjust one or more of the plurality of audio parameters of the first profile based on the analysis, the metadata, or a combination of the analysis and the metadata;
process the second audio signal with the adjusted first profile to the second audio signal; and
send the processed second audio signal with the adjusted first profile to the one or more playback devices.

10. The apparatus of any one of claims 1 to 8, wherein the processor is further operable to:
receive a second audio signal;
receive metadata associated with the second audio signal;
determine a similarity score of the metadata of the second audio signal to the metadata of the first audio signal;
create a second profile associated with the second audio signal if the similarity score is below a pre-determined threshold, the second profile comprising a plurality of adjustable audio parameters;
process the second audio signal with the plurality of adjustable audio parameters of the second profile;
send the processed second audio signal with the second profile to the one or more playback devices;
receive, from one or more sensors, one or more fourth user inputs; analyse the one or more fourth user inputs;
adjust one or more of the plurality of audio parameters of the second profile based on the analysis, the metadata, or a combination of the analysis and the metadata;
process the second audio signal with the adjusted second profile; and
send the processed second audio signal with the adjusted second profile to the one or more channels.

11. A system comprising:
the apparatus of any one of claims 1 to 10;
one or more playback devices coupled to the apparatus;
one or more sensors coupled to the apparatus;
a graphical user interface, GUI, coupled to the apparatus.

12. A method comprising:
receiving a first audio signal;
receiving metadata associated with the first audio signal;
creating a first profile associated with the first audio signal, the first profile comprising a plurality of adjustable audio parameters;
processing the first audio signal with the plurality of adjustable audio parameters of the first profile;
sending the processed first audio signal with the first profile to one or more playback devices;
receiving, from one or more sensors, one or more first user inputs;
analysing the one or more first user inputs;
adjusting one or more of the plurality of audio parameters of the first profile based on the analysis, the metadata, or a combination of the analysis and the metadata;
processing the first audio signal with the adjusted first profile ; and
sending the processed first audio signal with the adjusted first profile to the one or more playback devices.

13. The method of claim 12 further comprising:
receiving one or more second user inputs;
analysing the one or more second user inputs;
adjusting one or more of the plurality of audio parameters of the first profile based on the analysis of the one or more second user inputs;
processing the first audio signal with the adjusted first profile to the first audio signal; and
sending the processed first audio signal with the adjusted first profile to the one or more playback devices.

14. The method of claims 12 or 13, further comprising:
receiving a second audio signal;
receiving metadata associated with the second audio signal;
determining a similarity score of the metadata of the second audio signal to the metadata of the first audio signal;
processing the second audio signal with the plurality of adjustable audio parameters of the first profile if the similarity score is above a pre-determined threshold;
sending the processed second audio signal with the first profile to the one or more playback devices;
receiving, from one or more sensors, one or more third user inputs;
analysing the one or more third user inputs;
adjusting one or more of the plurality of audio parameters of the first profile based on the analysis, the metadata, or a combination of the analysis and the metadata;
processing the second audio signal with the adjusted first profile; and
sending the processed second audio signal with the adjusted first profile to the one or more playback devices.

15. The method of claims 12 or 13, further comprising:
receiving a second audio signal;
receiving metadata associated with the second audio signal;
determining a similarity score of the metadata of the second audio signal to the metadata of the first audio signal;
creating a second profile associated with the second audio signal if the similarity score is below a pre-determined threshold, the second profile comprising a plurality of adjustable audio parameters;
processing the second audio signal with the plurality of adjustable audio parameters of the second profile;
sending the processed second audio signal with the second profile to the one or more playback devices;
receiving, from one or more sensors, one or more fourth user inputs;
analysing the one or more fourth user inputs;
adjusting one or more of the plurality of audio parameters of the second profile based on the analysis, the metadata, or a combination of the analysis and the metadata;
processing the second audio signal with the adjusted second profile; and
sending the processed second audio signal with the adjusted second profile to the one or more playback devices.
